# EUROPEAN PATENT APPLICATION

(11) **EP 3 572 982 A1**
(43) Date of publication of application: **27.11.2019**
(21) Application number: 18174351.9
(22) Date of filing: 25.05.2018
(51) Int. Cl.: G06N 3/00, G06N 3/04

(54) **MACHINE LEARNING SYSTEM**

(71) Applicant: Robert Bosch GmbH, 70442 Stuttgart (DE)
(72) Inventor: Van Hoof, Herke, 1112 ZJ Diemen (NL); Welling, Max, 1402 GN Bussum (NL); Shang, Wenling, 1098 XK Amsterdam (NL); Van der Wal, Douwe, 1095 KX Amsterdam (NL)

(57) **Abstract**

The present invention relates to a machine learning system (10). It is described to providing (110) a processing unit with input data. The processing unit processes (120) the input data to generate processing path input data. The processing unit implements (130) a first processing path comprising a feed-forward neural network to process the processing path input data to generate first intermediate data. The processing unit implements (140) a second processing path comprising a feed-forward neural network to process the processing path input data to generate second intermediate data, wherein the second processing path is stochastic. The processing unit implements (150) a value output path comprising a feed-forward neural network to process the first intermediate data and the second intermediate data to generate value output data. The processing unit implements (160) a policy output path comprising a feed-forward neural network to process the first intermediate data and the second intermediate data to generate policy output data. An output unit outputs (170) the value output data and the policy output data.

## Description

### FIELD OF THE INVENTION

The present invention relates to a machine learning system, and a method of implementing a machine learning system.

### BACKGROUND OF THE INVENTION

Reinforcement learning (RL) is a machine-learning framework developed to learn an approximately optimal control policy for a physical device or software system from experience. In RL, the controller (also called agent) needs to explore the space of available states and actions to be controlled, and receives so-called reward signals, which indicate the success of the policy being followed. Importantly, rewards typically do not immediately signal whether every single action taken was optimal, but may be given with delay or stochastically only after a sequence of action. Hence, a difficult credit-assignment problem needs to be solved, which decides which of the previously taken actions should be credited for the reward (which may also be negative if a wrong action is taken). The main goals of RL algorithms are:
- Finding the best possible policy for the control problem, i.e. the policy that achieves the maximum overall reward; and
- Learning such optimal policy as quickly as possible through smart exploration strategies, i.e. trying out actions with unknown outcome without risking large negative rewards (which might e.g. correspond to damage to the controlled physical system), and maximizing the gained information about the system to be controlled.

General reinforcement learning algorithms have been known for several decades, but only in recent years it has become possible to deal with very difficult scenarios, which are characterized by very large, or even continuous (and therefore infinitely large) state and action spaces, and complex dynamics of the system to be controlled. Early RL algorithms were based on the assumption that every state-action pair can be explored arbitrarily often, and a value function can be learned, which estimates the expected reward feasible from each possible state, or for state-action pairs. This concept, however, works only for discrete spaces, and becomes infeasible for very large state and action spaces, which are of interest here. A major breakthrough has been the combination of RL with Deep Learning, known as Deep RL. This concept uses deep neural networks (DNNs) to learn meaningful abstractions of high dimensional state signals, and/or uses DNNs to approximate policies and value functions.

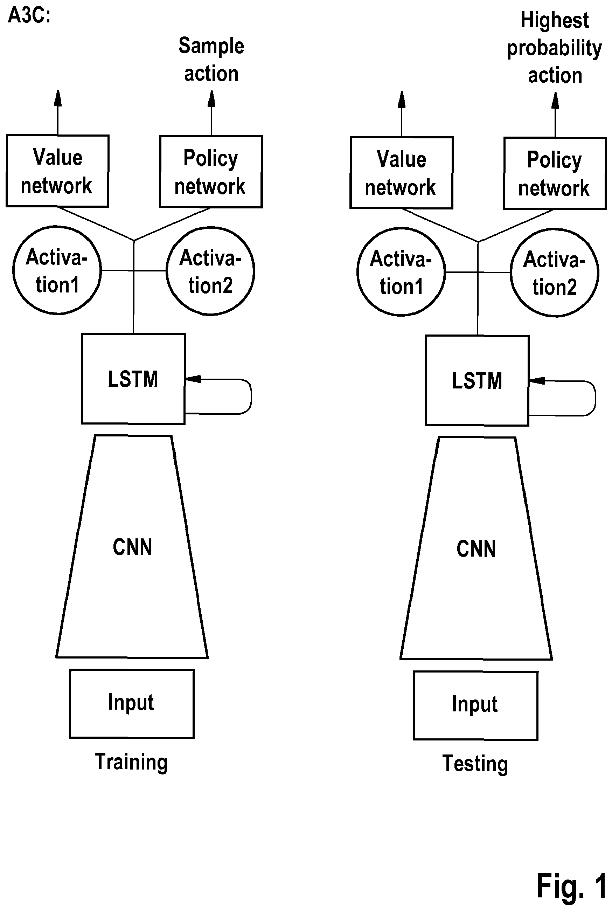

Mnih et al "Asynchronous methods for deep reinforcement learning" In 33rd International Conference on Machine Learning, New York, NY, USA, 2016, JMLR: W&CP volume 48, developed the asynchronous advantage actor-critic (A3C). A3C is a fast, robust, light-weighted, model-free Deep RL algorithm achieving state-of-the-art results on many complex gaming tasks such as Atari 2600, Viz-Doom, and mini-StarCraft. In A3C, multiple agents are spawned to concurrently interact with the environment with different random seeds and optimize a shared model that approximates both the policy and value function through asynchronous gradient descent. The A3C algorithm is shown schematically in Fig. 1. The A3C algorithm is composed of a feed-forward convolutional neural network (CNN) to extract features from high-dimensional input signals (e.g. raw visual input), a recurrent LSTM (Long short-term memory) neural network to incorporate time dependency from previous steps, a value network to approximate value, and a policy network to approximate policy. The input is processed by the CNN, feeding into the recurrent network (LSTM). The output of the LSTM is then mapped to a value function and a policy with two different networks. In A3C all networks are deterministic. On the left of Fig. 1, the network used during training is shown, and on the right, the network used during testing is shown. For A3C the networks are identical, only for policy network two different types of action selection are performed (sample vs. highest probability action). During training, A3C samples its actions from the approximated policy distribution; during testing, A3C takes the action with the highest probability in the discrete case. All weights in A3C-LSTM are always deterministic, and also activations are always deterministic. During training, the actions are sampled from the policy distribution. During testing / evaluation, the actions are chosen to be the policy with highest likelihood.

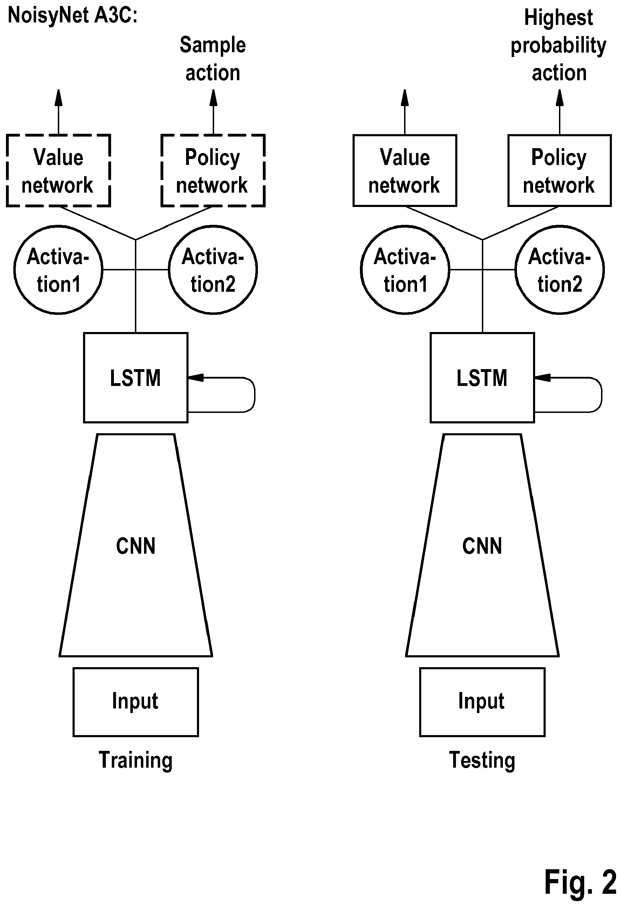

Fortunato et al "Noisy Networks for Exploration", published as a conference paper at ICLR 2018, developed NoisyNet, a deep reinforcement-learning agent with parametric noise added to its weights. Plappert et al "Parameter Space Noise for Exploration" published as a conference paper at ICLR 2018 combine parameter space noise with off-the-shelf algorithms. In Fortunato et al., Deep Q Network (DQN) a deep learning variant of the Q-learning algorithm and A3C without LSTM frameworks are used; the weights follow Gaussian distributions with learned mean and variance. In Plappert et al., DQN and policy gradient frameworks are used; the weights also follow Gaussian distributions but with adaptive variance basing on the distance between current policy and perturbed policy. During testing, the weights are fixed to be the mean value of the Gaussian distributions. Terming such developments as NoisyNet A3C, on the high level this line of models in summary inject noise to model parameters during training to encourage exploration. The models are shown in combined form in Fig. 2, whereas discussed above the architecture is similar to A3C, but during training the output, networks (Value Network and Policy Network) are stochastic.

However, in such machine learning systems stochasticity in the dynamics of the controlled system, and also a lack of training data, can lead to imperfect approximations, and therefore sub-optimal decisions.

### SUMMARY OF THE INVENTION

Therefore, it would be advantageous to have an improved machine learning system and method of implementing a machine learning system.

The object of the present invention is solved with the subject matter of the independent claims, wherein further embodiments are incorporated in the dependent claims. It should be noted that the following described aspects of the invention apply also for the machine learning system, and the method of implementing a machine learning system, as well as to the computer program element and computer readable medium.

In a first aspect, there is provided a machine learning system, comprising:
- an input unit:
- a processing unit; and
- an output unit.

The input unit is configured to provide the processing unit with input data. The processing unit is configured to process the input data to generate processing path input data. The processing unit is configured to implement a first processing path comprising a feed-forward neural network to process the processing path input data to generate first intermediate data. The processing unit is configured to implement a second processing path comprising a feed-forward neural network to process the processing path input data to generate second intermediate data, wherein the second processing path is stochastic. The processing unit is configured to implement a value output path comprising a feed-forward neural network to process the first intermediate data and the second intermediate data to generate value output data. The processing unit is configured to implement a policy output path comprising a feed-forward neural network to process the first intermediate data and the second intermediate data to generate policy output data. The output unit is configured to output the value output data and output the policy output data.

In other words, stochastic hidden units are explicitly introduced after the processing of high-dimensional input signals with neural networks, in order to achieve effective exploration in uncertain environments.

In this manner, reinforcement learning (RL) within a machine-learning framework is used to learn an approximately optimal control policy for a physical device or software system from experience.

The system is able to deal with uncertainties that arise due to stochasticity in the dynamics of the controlled system, and to any lack of training data that can otherwise lead to imperfect approximations and sub-optimal decisions.

Thus, the problem of Deep RL in environments exhibiting significant environmental uncertainty is addressed.

Faster convergence is provided, in that policies can be learned with less training data and in a shorter time, reducing the costs for learning a control policy. If the controlled system comprises physical devices, then also wear on the devices is reduced and there is a lower risk of damaging the devices during training.

A better learning policy is achieved, with the improved exploration due to stochastic units leading to a better policy being learned. This means that the device being controlled performs better, e.g. faster, safer, less risky, more cost-efficient, which can depend on how the reward function was defined.

Better exploration is enabled. Because of stochasticity of the units, the controller can more efficiently explore the state and actions spaces, and can choose actions stochastically in the presence of uncertainty. This provides for better coverage of all relevant state-action combinations during training.

In an example, to process the input data the processing unit is configured to implement a feed-forward neural network to process the input data to generate first output data, and the processing unit is configured to implement a recurrent neural network to generate second output data comprising utilization of the first output data and previous second output data generated from a previous activation of the recurrent neural network, and wherein the second output data is the processing path input data.

In an example, the first processing path is deterministic.

In an example, implementation of the first processing path to generate the third output data comprises parameterization by a fully connected layer.

In an example, the first processing path is stochastic.

In an example, implementation of the second processing path to generate the second intermediate data comprises utilization of a factored Gaussian distribution.

In an example, hidden layers of the feed-forward neural network of the second processing path follow the factored Gaussian distribution.

In an example, a mean of the factored Gaussian distribution is calculated as a function of a mean of the second output data.

In an example, a variance of the factored Gaussian distribution is calculated as a function of a variance of the second output data.

In a second aspect, there is provided a method of implementing a machine learning system, comprising:
a) providing a processing unit with input data;
b) processing the input data by the processing unit to generate processing path input data;
c) implementing by the processing unit a first processing path comprising a feed-forward neural network to process the processing path input data to generate first intermediate data;
d) implementing by the processing unit a second processing path comprising a feed-forward neural network to process the processing path input data to generate second intermediate data, wherein the second processing path is stochastic;
e) implementing by the processing unit a value output path comprising a feed-forward neural network to process the first intermediate data and the second intermediate data to generate value output data;
f) implementing by the processing unit a policy output path comprising a feed-forward neural network to process the first intermediate data and the second intermediate data to generate policy output data; and
g) outputting by an output unit the value output data and the policy output data.

According to another aspect, there is provided a computer program element controlling apparatus as previously described which, in the computer program element is executed by processing unit, is adapted to perform the method steps as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to Figs 3-5, with Figs 1-2 having been discussed above:
Fig. 1 shows a schematic representation of the A3C machine learning system;
Fig. 2 shows a schematic representation of the NoisyNet A3C machine learning system;
Fig. 3 shows a schematic representation of an example of a newly developed machine learning system;
Fig. 4 shows a method of implementing a newly developed machine learning system; and
Fig. 5 shows a detailed example of the machine learning system of Fig. 3;

### DETAILED DESCRIPTION OF EMBODIMENTS

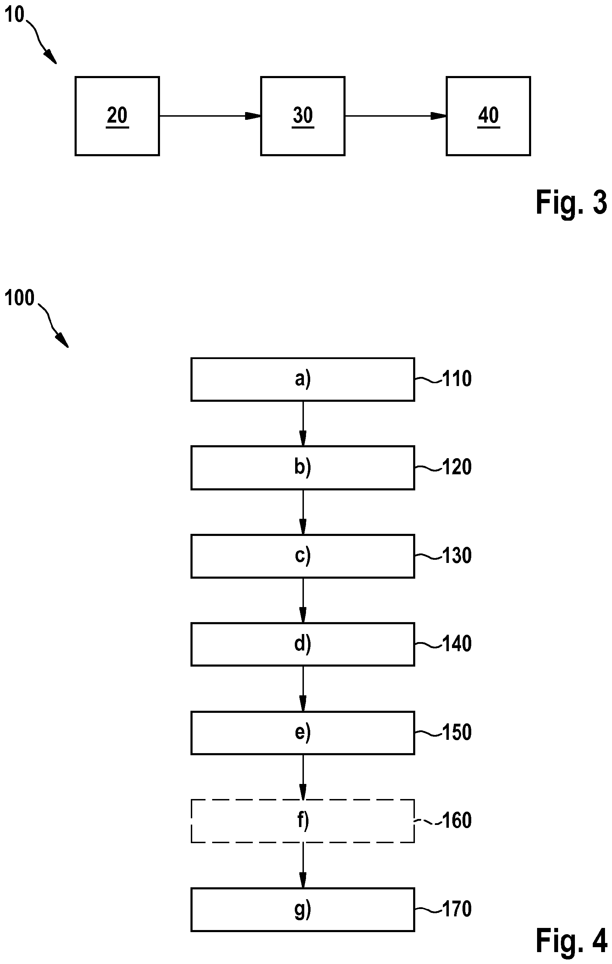

Fig. 3 shows an example of a machine learning system 10 that addresses issues with the machine learning system described above with respect to Figs 1-2. The machine learning system comprises an input unit 20, a processing unit 30, and an output unit 40. The input unit 20 is configured to provide the processing unit 30 with input data. The processing unit 30 is configured to process the input data to generate processing path input data. The processing unit 30 is configured also to implement a first processing path comprising a feed-forward neural network to process the processing path input data to generate first intermediate data. The processing unit 30 is configured also to implement a second processing path comprising a feed-forward neural network to process the processing path input data to generate second intermediate data. The second processing path is stochastic. The processing unit 30 is configured to implement a value output path comprising a feed-forward neural network to process the first intermediate data and the second intermediate data to generate value output data. The processing unit 30 is configured also to implement a policy output path comprising a feed-forward neural network to process the first intermediate data and the second intermediate data to generate policy output data. The output unit 40 is configured to output the value output data and output the policy output data.

In an example, the first processing path comprises a fully connected neural network with zero or multiple hidden layer.

In an example, the second processing path comprises a fully connected neural network with zero or multiple hidden layer.

In an example, the first processing path comprises a convoluted neural network (CNN).

In an example, the second processing path comprises a convoluted neural network (CNN).

In an example, the value output path comprises a fully connected neural network with zero or multiple hidden layer.

In an example, the policy output path comprises a fully connected neural network with zero or multiple hidden layer.

In an example, the value output path comprises a convoluted neural network (CNN).

In an example, the policy output path comprises a convoluted neural network (CNN).

In an example, the second processing path comprises utilization of arbitrary random distributions. In an example, such random distributions can be generated using a random number generator using for example thermal noise or a pseudo random number generator in software.

According to an example, to process the input data the processing unit is configured to implement a feed-forward neural network to process the input data to generate first output data. The processing unit is configured also to implement a recurrent neural network to generate second output data comprising utilization of the first output data and previous second output data generated from a previous activation of the recurrent neural network. The second output data described here is the processing path input data as described above.

In an example, the feed-forward neural network generates the first output data through one or more multiple layers of nonlinear mapping and pooling operations.

In an example, the first output data is an abstract feature vector.

In an example, the input data is an input image.

In an example, generation of the first output data comprises the feed-forward neural network extracting abstract features from the input image.

In an example, the feed-forward neural network is a convolutional neural network (CNN).

In an example, the recurrent neural network is a LSTM (Long short-term memory) neural network.

In an example, the previous activation of the recurrent neural network occurs at a discrete time index before the present activation of the recurrent neural network.

In an example, the second output data is a feature vector.

According to an example, the first processing path is deterministic.

According to an example, implementation of the first processing path to generate the third output data comprises parameterization by a fully connected layer.

According to an example, the first processing path is stochastic.

According to an example, implementation of the second processing path to generate the second intermediate data comprises utilization of a factored Gaussian distribution.

According to an example, hidden layers of the feed-forward neural network of the second processing path follow the factored Gaussian distribution.

According to an example, a mean of the factored Gaussian distribution is calculated as a function of a mean of the second output data.

In an example, a mean of the factored Gaussian distribution is calculated as the mean of the second output data

According to an example, a variance of the factored Gaussian distribution is calculated as a function of a variance of the second output data.

In an example, a variance of the factored Gaussian distribution is calculated as the variance of the second output data.

Fig. 4 shows a method 100 of implementing a machine learning system that addresses the issues of the machine learning systems described above with reference to Figs. 1-2- The method 100 comprises:
in a providing step 110, also referred to as step a), providing a processing unit with input data;
in a processing step 120, also referred to as step b), processing the input data by the processing unit to generate processing path input data;
in an implementing step 130, also referred to as step c), implementing by the processing unit a first processing path comprising a feed-forward neural network to process the processing path input data to generate first intermediate data;
in an implementing step 140, also referred to as step d), implementing by the processing unit a second processing path comprising a feed-forward neural network to process the processing path input data to generate second intermediate data, wherein the second processing path is stochastic;
in an implementing step 150, also referred to as step e), implementing by the processing unit a value output path comprising a feed-forward neural network to process the first intermediate data and the second intermediate data to generate value output data; and
in an implementing step 160, also referred to as step f), implementing by the processing unit a policy output path comprising a feed-forward neural network to process the first intermediate data and the second intermediate data to generate policy output data; and
in an outputting step 170, also referred to as step g), outputting by an output unit the value output data and the policy output data.

In an example, step c) comprises implementing a fully connected neural network with zero or multiple hidden layer.

In an example, step d) comprises implementing a fully connected neural network with zero or multiple hidden layer.

In an example, step c) comprises implementing a convoluted neural network (CNN).

In an example, step d) comprises implementing a convoluted neural network (CNN).

In an example, step e) comprises implementing a fully connected neural network with zero or multiple hidden layer.

In an example, step f) comprises implementing a fully connected neural network with zero or multiple hidden layer.

In an example, step e) comprises implementing a convoluted neural network (CNN).

In an example, step f) comprises implementing a convoluted neural network (CNN).

In an example, step d) comprises utilizing arbitrary random distributions. In an example, such random distributions can be generated using a random number generator using for example thermal noise or a pseudo random number generator in software.

In an example, step b) comprises implementing by the processing unit a feed-forward neural network to process the input data to generate first output data, and implementing by the processing unit a recurrent neural network to generate second output data comprising utilization of the first output data and previous second output data generated from a previous activation of the recurrent neural network, and wherein the second output data is the processing path input data.

In an example, step b) comprises generating the first output data through one or more multiple layers of nonlinear mapping and pooling operations.

In an example, in step b) the first output data is an abstract feature vector.

In an example, in step b) the input data is an input image.

In an example, step b) comprises the feed-forward neural network extracting abstract features from the input image.

In an example, in step b) the feed-forward neural network is a convolutional neural network (CNN).

In an example, in step b) the recurrent neural network is a LSTM (Long short-term memory) neural network.

In an example, in step b) the previous activation of the recurrent neural network occurs at a discrete time index before the present activation of the recurrent neural network.

In an example, in step b) the second output data is a feature vector.

In an example, in step c) the first processing path is deterministic.

In an example step c) comprises parameterization by a fully connected layer.

In an example, in step c) the first processing path is stochastic.

In an example, step d) comprises utilizing a factored Gaussian distribution.

In an example, in step d) hidden layers of the feed-forward neural network of the second processing path follow the factored Gaussian distribution.

In an example, in step d) a mean of the factored Gaussian distribution is calculated as a function of a mean of the second output data.

In an example, a mean of the factored Gaussian distribution is calculated as the mean of the second output data.

In an example, in step d) a variance of the factored Gaussian distribution is calculated as a function of a variance of the second output data.

In an example, a variance of the factored Gaussian distribution is calculated as the variance of the second output data.

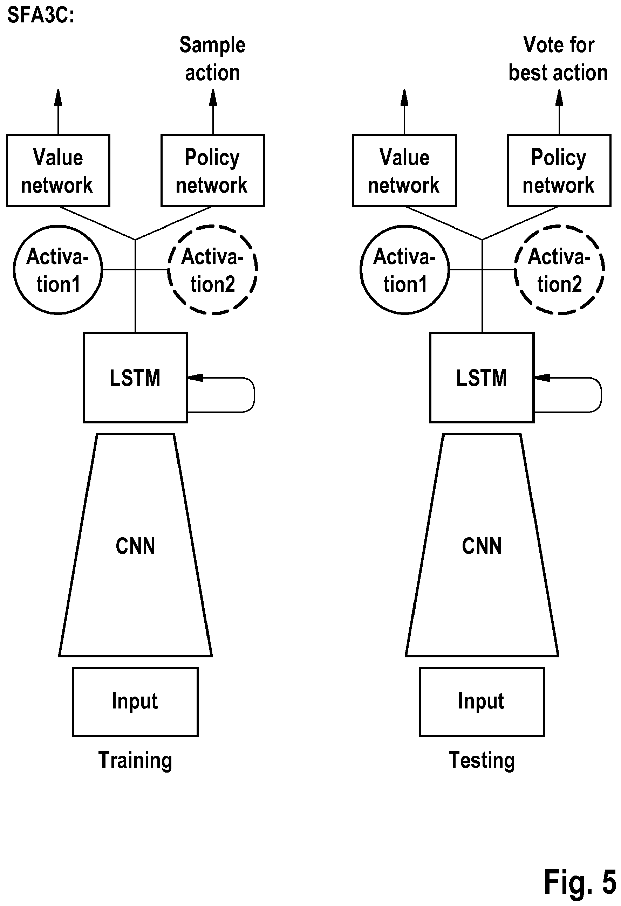

The machine learning system 10 of Fig. 3 and the method of implementing a machine learning system 100 of Fig. 4 are now described in further detail with reference to Fig. 5.

As discussed above with reference to Figs. 3-4 the machine learning system developed here addresses the problem of reinforcement learning to obtain a close-to-optimal control policy for some physical or virtual system in the shortest possible time. RL is particularly useful in scenarios where analytical methods from control theory cannot be applied, e.g. because the system to be controlled is too complex, or there are many uncertain factors (e.g. reactions of other agents in the environment). Specifically the problem of learning policies under various forms of uncertainty is tackled.

Uncertainty is a central topic in decision making, not only for machines but also for humans. Analogous to human decision making, it is also necessary for general machine learning algorithms to take uncertainties, e.g. about the perceived state, or about the outcome of a chosen action into consideration. Moreover, the training of machine learning models often encounters an additional form of uncertainty due to the lack of data leading to imperfect parameter estimations or even model architecture selections, referred to as model uncertainty.

A reinforcement-learning problem not only inherits all the uncertain factors commonly appearing in general machine-learning setups but is further challenged by a new layer of uncertainty: the dynamics of its environment, such as uncertain factors in the returns.

The machine learning system developed here and shown in Fig. 5 mitigates these issues by explicitly introducing stochastic hidden units after the processing of high dimensional input signals with neural networks, in order to achieve effective exploration in uncertain environments.

Compared to the state-of-the-art baseline A3C described with reference to Fig. 1, the machine learning system and associated method as shown in Fig. 5 contains stochastic activations during training and testing, whereas A3C has deterministic activation and deterministic policies during testing time. By adding stochastic components, the system and method of Fig. 5 allows more efficient exploration on top of softmax sampling for actions, which leads to faster convergence as well as better performance of the finally learned policy. This has been experimentally confirmed in various benchmark problems. Moreover, the system and method of Fig. 5 also provides stochastic policies when the correct answer is ambiguous due to dynamics uncertainty.

Comparing with parametric space noise described with reference to Fig. 2, the system and method of Fig. 5 imposes randomness in the activation. The benefit of doing so are first due to LSTM's long sequence for each training iteration. Adding different stochasticities per time step induces more a complex change over the policy than a fixed stochasticity over parameters for the entire LSTM sequence. Hence, better exploration is achieved, and secondly, more flexibility in how to construct the stochastic units depending on the RL problem in hand is gained. As a result, the system and method of Fig. 5 achieves much improved final policy than NoisyNet.

Thus, referring to Fig. 5 a reinforcement learning RL system and method has been developed, that is here called Stochastic Feedforward A3C (SFA3C). As shown, the architecture shares some similarities with A3C, but the output of the LSTM is processed in two different paths, one being deterministic (Activation 1) and the second being stochastic (Activation 2). The output networks (Value Network and Policy Network) receive the combined result of the deterministic and stochastic paths as inputs, but as discussed below the deterministic path can also be stochastic.

Continuing with Fig. 5 the underlying mechanism is a collection of different neural networks, which are designed in a way to map an input image into two output signals, one being a value function, and the second being the policy. The architecture consists of the following components:
- A convolutional neural network (CNN), which receives an input image, and through 1 or multiple layers of nonlinear mappings and pooling operations creates an abstract feature vector.
- A recurrent neural network of the LSTM type, which receives the output of the CNN, and maps it into another feature vector ht, which depends on the output of the CNN, and previous activation of the LSTM ht-1 (where t is a discrete time index).
- Two parallel paths that transform the output of the LSTM ht into two abstract feature vectors. Importantly, and specifically in SFA3C (but not in A3C) is that one of the pathways is stochastic (Activation 2), and the second pathway is normally deterministic (Activation 1) but can also in an alternative embodiment be stochastic as well. These can be described by fully connected neural networks with zero or multiple hidden layers, or other types of feed-forward networks, e.g. CNNs.
- Two output networks, transforming the concatenated output of both the deterministic and stochastic paths into a value function and a policy. This can be implemented by fully connected neural networks with zero or multiple hidden layers, or other types of feed-forward networks.

### Stochastic Pathway

An important part of SFA3C compared to other architectures such as A3C is the stochastic pathway following the LSTM layer. SFA3C is designed in the following manner: immediately following ht, the output from LSTM, the next hidden layer is split into a deterministic path (Activation 1) and a stochastic path (Activation 2). The deterministic path kt = fdet(ht) is parameterized by a fully connected layer. The stochastic hidden units follow a factored Gaussian distribution. There are two variations in inferring the mean of the stochastic units. The most simple version is state-independent: that is to learn a universal mean not taking account of the current state. As simple as it is, this version of SFA3C can in fact improve performance over environments with simple exploration setup. However, as expected, state independent noise can become an issue, once more complex exploration is required. Therefore, a state dependent variation is introduced where the mean is inferred from computing a function of the LSTM output µt = fmean(ht), and similarly to the deterministic units parameterized by a fully connected layer. In both cases, the variance σt is fixed to a certain value, selected as a hyperparameter. A variation is possible where also the variance can be computed as a function of the LSTM output, i.e. σt = fvar(ht) .

Forwarding a new image through the neural network implementing SFA3Cs is similar to A3C-LSTM (Mnih et al.), but with the following difference: for stochastic units, samples are created from the Gaussian distribution according to zt ∼ N (µt , σt), and concatenated with kt as the inputs for the policy and value networks. Training the network via backpropagation through the stochastic units is done by performing the reparametrization to reduce variance of gradients.

Finally other variations of stochastic unit SFA3C can be derived basing on this fundamental idea, including replacing the deterministic parts and constructing a fully stochastic SFA3C and adding an additional prior to regularize the parameters of the distributions to the stochastic units.

### Alternative Implementations

In principle the following modifications are possible:
- Instead of a CNN, another feed-forward network with zero or multiple hidden layers can be used to extract abstract features from the image.
- Instead of an LSTM network, any type of recurrent network can be used, e.g. Gated Recurrent Units (GRU) or reservoir networks.
- Different types of feed-forward networks can be used to transform the output of the LSTM layer into outputs for value function or policy. In principle these networks can also be recurrent.
- The stochastic pathway can use arbitrary random distributions.
- The random number generator can be a physical generator, using e.g. thermal noise, or a pseudo random number generator in software.

The new machine learning system and method of implementing a machine learning system, as described with respect to Figs. 3-5, finds utility as follows:
- Controllers for engines, valves, electrical circuits, heating systems, which are too complex to be solved with analytical methods. The system and method could lead to faster and more economical learning of the final control policy, and a better final policy.
- Control of robotic arms, aerial drones, or humanoid robots, e.g. for household robots, or for applications in manufacturing. Robots could use the system and method to speed up learning of maneuvering or grasping policies in unknown and uncertain environments. Controllers for self-driving vehicles, which can learn complex maneuvers based on one or multiple high-dimensional sensory inputs, e.g. video cameras, lidar, radar, or ultrasound. Online-learning physical or virtual agents that improve their function or adapt to changes in their environment by changing their control policy.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A machine learning system (10), comprising:
- an input unit (20);
- a processing unit (30); and
- an output unit (40);
wherein, the input unit is configured to provide the processing unit with input data;
wherein, the processing unit is configured to process the input data to generate processing path input data;
wherein, the processing unit is configured to implement a first processing path comprising a feed-forward neural network to process the processing path input data to generate first intermediate data;
wherein, the processing unit is configured to implement a second processing path comprising a feed-forward neural network to process the processing path input data to generate second intermediate data, wherein the second processing path is stochastic;
wherein, the processing unit is configured to implement a value output path comprising a feed-forward neural network to process the first intermediate data and the second intermediate data to generate value output data;
wherein, the processing unit is configured to implement a policy output path comprising a feed-forward neural network to process the first intermediate data and the second intermediate data to generate policy output data; and
wherein, the output unit is configured to output the value output data and output the policy output data.

2. Machine learning system according to claim 1, wherein to process the input data the processing unit is configured to implement a feed-forward neural network to process the input data to generate first output data, and the processing unit is configured to implement a recurrent neural network to generate second output data comprising utilization of the first output data and previous second output data generated from a previous activation of the recurrent neural network, and wherein the second output data is the processing path input data.

3. Machine learning system according to any of claims 1-2, wherein the first processing path is deterministic.

4. Machine learning system according to claim 3, wherein implementation of the first processing path to generate the third output data comprises parameterization by a fully connected layer.

5. Machine learning system according to any of claims 1-2, wherein the first processing path is stochastic.

6. Machine learning system according to any of claims 1-5, wherein implementation of the second processing path to generate the second intermediate data comprises utilization of a factored Gaussian distribution.

7. Machine learning system according to claim 6, wherein hidden layers of the feed-forward neural network of the second processing path follow the factored Gaussian distribution.

8. Machine learning system according to any of claims 6-7, wherein a mean of the factored Gaussian distribution is calculated as a function of a mean of the second output data.

9. Machine learning system according to any of claim 6-8, wherein a variance of the factored Gaussian distribution is calculated as a function of a variance of the second output data.

10. A method (100) of implementing a machine learning system, comprising:
a) providing (110) a processing unit with input data;
b) processing (120) the input data by the processing unit to generate processing path input data;
c) implementing (130) by the processing unit a first processing path comprising a feed-forward neural network to process the processing path input data to generate first intermediate data;
d) implementing (140) by the processing unit a second processing path comprising a feed-forward neural network to process the processing path input data to generate second intermediate data, wherein the second processing path is stochastic;
e) implementing (150) by the processing unit a value output path comprising a feed-forward neural network to process the first intermediate data and the second intermediate data to generate value output data;
f) implementing (160) by the processing unit a policy output path comprising a feed-forward neural network to process the first intermediate data and the second intermediate data to generate policy output data; and
g) outputting (170) by an output unit the value output data and the policy output data.
